# EUROPEAN PATENT SPECIFICATION

(11) **EP 4 336 998 B1**
(45) Date of publication and mention of the grant of the patent: **18.11.2026**
(21) Application number: 22722584.4
(22) Date of filing: 04.05.2022
(51) Int. Cl.: A01J 5/007, A01J 9/04

(54) **MILK HANDLING SYSTEM, COMPUTER-IMPLEMENTED METHOD FOR CONTROLLING A FLOW OF MILK**
MILCHVERARBEITUNGSSYSTEM, COMPUTERIMPLEMENTIERTES VERFAHREN ZUR STEUERUNG EINES MILCHSTROMS
SYSTÈME DE TRAITEMENT DU LAIT, PROCÉDÉ MIS EN OEUVRE PAR ORDINATEUR POUR RÉGULER UN ÉCOULEMENT DE LAIT

(30) Priority: 11.05.2021 SE 2150596
(43) Date of publication of application: 20.03.2024
(73) Proprietor: DeLaval Holding AB, 147 21 Tumba (SE)
(72) Inventor: BOSEK, Lukasz, 147 21 Tumba (SE)
(74) Representative: DeLaval International AB
(86) International application number: PCT/SE2022/050432
(87) International publication number: WO 2022/240335

(56) References cited:
- GB-A- 2 303 226
- US-A1- 2007 272 158
- US-A1- 2020 008 389
- US-A1- 2021 112 769

## Description

### TECHNICAL FIELD

The present invention relates generally to milk-flow and cooling regulation. Especially, the invention relates to a milk handling system comprising a balance tank, a control unit and a cooling system, wherein the control unit is arranged to control a flow of milk through the cooling system from the balance tank to a storage tank and a corresponding computer-implemented method.

### BACKGROUND

For quality and hygienic reasons it is important that the temperature of the milk extracted from milk-producing animals is kept sufficiently low throughout the entire extraction and storage process. The rate at which an incoming milk flow enters the system is typically unknown, at least to some extent, due to the fact that different animals produce different amounts of milk per unit time. The number of animals from which milk is extracted may also vary during a milking session. It is therefore challenging to control the cooling of the milk between an input balance tank and a storage tank, where the milk is held until being transported to a dairy, or similar facility.

WO 97/16962 shows an apparatus for cooling a product, which apparatus comprises a first evaporator and a second evaporator separate from the first evaporator, a first heat exchanger incorporating the first evaporator and a second heat exchanger incorporating the second evaporator. In operation, the product or an intermediate heat transfer medium is cooled in at least two first stages. During the first stage, heat is withdrawn from the product or the medium by the first evaporator cooling the product or the medium to an intermediate temperature. During the second stage, heat is withdrawn from the product or the medium by the second evaporator further cooling the product or the medium to the desired temperature. Since the product or the medium is partially cooled by an evaporator operating at a higher evaporating temperature than required for achieving the desired temperature, an improved energy efficiency is achieved.

WO 2018/111184 discloses a method for cooling milk in a milking arrangement. A milk cooling apparatus of the milking arrangement contains a coolant circuit for heat exchange between milk and a coolant and a refrigerant circuit for heat exchange between a refrigerant and the coolant. The method involves: controlling the refrigerant circuit to maintain a predefined temperature range; receiving a first signal relating to commencement or increase of a milk flow from a milking system of the milking arrangement; starting or increasing circulation of coolant in the coolant circuit; and leading the milk flow through the milk cooling apparatus.

WO 2019/004818 describes a milking system containing a milking device for milking a milking from a dairy animal during a milking session, and is provided with a control unit for the milking system, milking cups, a first milk jar for receiving the milking, a first pumping device for pumping the milking from the first milk jar to a first milk pipe, a second milk jar in flow communication with the first milk pipe for receiving the milking from the first milk jar therefrom, and a second pumping device for pumping the milking from the second milk jar into a second milk pipe. The first pumping device is configured to pump the milking at a first flow rate and the second pumping device is configured to pump the milking at a second flow rate, which is lower than the first flow rate. The milking system furthermore contains a heat-exchanging system in flow communication with the second milk pipe for receiving the milking pumped in the second milk pipe and for bringing the received milking to a desired temperature. The capacity of the milking system is maintained by pumping the milking directly after a milking, but by collecting this milking in the second milk jar and pumping it relatively slowly and steadily, the milk quality is maintained more reliably. In addition, a downstream heat exchanger can then be made smaller. Also, it is then easier to change the desired temperature.

US2021/112769A1 discloses a milk handling system, wherein a pumping device has a flow rate which is automatically adjustable by the control unit. The control unit is configured to adjust the flow rate as a function of a volume of the received milking. The control unit may be configured to determine the expected milk yield by means of the animal identity and the milking interval.

US2020/008389A1 discloses a milking system where a milk pump is configured to produce a milk flow from a balance tank towards a milk storage tank via a milk cooling apparatus. Milk may be pumped from the balance tank by the milk pump once the balance tank is filled to a certain degree. The balance tank may be provided with a level sensor to detect the level of milk in the tank.

Thus, designs are known according to which the capacity for pumping and cooling of a product, such as extracted milk, can be adapted to varying incoming amounts of the product. This is beneficial for ensuring a stable temperature and maintaining a high quality of the product. However, the known solutions are suboptimal with the respect to the overall cooling efficiency and energy consumption in the pumping and cooling system.

### SUMMARY

The object of the present invention is therefore to offer a solution that solves the above problem by providing an efficient cooling and economizing of the energy resources used for pumping and cooling extracted milk before storing it in a storage tank. According to one aspect of the invention, the object is achieved by a milk handling system according to claim 1.

This control unit is advantageous because the proactive control of the milk-flow rate avoids unnecessary temporary increases or decreases in the pumping and cooling capacity by maintaining a comparatively stable flow of milk through the cooling system.

According to one embodiment of this aspect of the invention, the prediction parameter is based on a second level-indicating signal reflecting a milk level in a receiver tank in which the milk from at least one, and preferably several, of the number of milking points is collected before being fed into the balance tank. The second level-indicating signal thus gives advance information about a milk level to be expected in the balance tank, and consequently future variations in the milk level can be taken into account in a straightforward manner.

According to other embodiments of this aspect of the invention, the prediction parameter is based on: an opening and/or closing of an entrance gate in to a closed area where the number of milking points are located; an opening and/or closing of an exit gate out from the closed area where the number of milking points are located; information about a number of milking animals currently being attached to the number of milking points; information about a number of milking animals currently being detached from the number of milking points; information about a milk flow or milk yield from the milking animals currently delivering milk via the number of milking points; and/or information about a previous milk yield or milk flow curve of the milking animals currently delivering milk via the number of milking points. Thereby, more sophisticated estimates can be made about expected future milk levels in the balance tank, and as a result, the milk pump may be controlled in an accurate and smarter manner with respect to the overall energy consumption.

According to yet other embodiments of this aspect of the invention, the prediction parameter is based on identity information relating to which milking animals that are present in the closed area where the number of milking points are located and/or temporal data indicating an extension of a period during which milking animals have been present in the closed area where the number of milking points are located. Analogous to the above, this enables sophisticated estimation of expected future milk levels in the balance tank, and consequently a smart control of the milk pump.

According to this aspect of the invention, the control unit is configured to generate the first control signal based on the first level-indicating signal such that an indicated milk level in the balance tank above a particular one of at least two predefined threshold levels causes the milk pump to pump the flow of milk out from the balance tank at a respective rate corresponding to each one of the at least two predefined threshold levels.

According to this aspect of the invention, the control unit is configured to generate the first control signal based on the prediction parameter such that the prediction parameter overrides the first level-indicating signal to cause the milk pump to pump the flow of milk out from the balance tank at a lower rate than the rate corresponding to the particular one of the at least two predefined threshold levels if: the first level-indicating signal indicates that the milk level in the balance tank is above the particular one of at least two predefined threshold levels and the prediction parameter indicates that the estimated future input of milk from the number of milking points is decreasing. Thereby, an unnecessary temporary increased pumping operation of the milk pump can be avoided. In other words, the overriding prediction parameter maintains the milk flow rate even if the first level-indicating signal indicates that the milk pump should switch to an increased flow rate pumping operation. The milk flow rate through the cooling system is hereby stabilized by the overriding prediction parameter to provide a more effective cooling and stable temperature on the milk. A full speed or emergency operation of the milk pump can in this way also be avoided, which full speed or emergency operation aims at preventing a flooding of the balance tank when the milk level exceeds a high threshold level. Analogously, it is further preferable if the control unit is configured to generate the first control signal based on the prediction parameter such that the prediction parameter overrides the first level-indicating signal to cause the milk pump to pump the flow of milk out from the balance tank at a higher rate than the rate corresponding to the particular one of the at least two predefined threshold levels if the first level-indicating signal indicates that the milk level in the balance tank is below the particular one of at least two predefined threshold levels and the prediction parameter indicates that the estimated future input of milk from the number of milking points is increasing. Thereby, an unnecessary temporary decreased pumping operation of the milk pump can be avoided. Hence, the overriding prediction parameter maintains the flow rate from the milk pump even if the first level-indicating signal indicates that the milk pump should switch to decreased flow rate or pumping operation. The milk flow rate through the cooling system is hereby stabilized by the overriding prediction parameter to provide a more effective cooling and stable temperature on the milk. An unnecessary stopping/idle operation and starting operation of the milk pump can also be avoided when the milk level temporarily drops below a low threshold level in the balance tank.

According to another embodiment of this aspect of the invention, the control unit is further configured to: receive a temperature-indicating signal from a temperature sensor measuring a temperature of the flow of milk before entering the storage tank; and generate the first control signal on the further basis of the temperature-indicating signal such that a cooling capacity of the cooling system is increased if the temperature-indicating signal reflects a milk temperature above a set temperature. Hence, the cooling requirement may be adequately weighed into the control loop.

According to yet another embodiment of the invention, the control unit is configured to generate the first control signal based on the temperature-indicating signal such that the cooling capacity of the cooling system is decreased if the temperature-indicating signal reflects a milk temperature below the set temperature. As a result, the energy resources may be further economized.

Preferably, the cooling system comprises a heat exchanger configured to transfer heat energy from the flow of milk to a coolant being circulated in a chiller by means of a coolant pump operating in response to a second control signal. The control unit is further configured to generate the second control signal based on the first level-indicating signal so that: a flow of the coolant and/or the cooling capacity of the chiller increases if the prediction parameter indicates that the estimated future input of milk from the number of milking points will increase during a predefined future interval and any one of the at least two predefined threshold levels will cause the milk pump to pump the flow of milk out from the balance tank at a higher flow rate, and the flow of the coolant and/or the cooling capacity of the chiller decreases if the prediction parameter indicates that the estimated future input of milk from the number of milking points will decrease during the predefined future interval and any one of the at least two predefined threshold levels will cause the milk pump to pump the flow of milk out from the balance tank at a lower flow rate. This proactive control or adaptation of the cooling system capacity to changes in the milk pump flow rate provides a more effective cooling and stable temperature on the milk. It further enhances the overall energy efficiency of the cooling system.

According to another aspect of the invention, the object is achieved by a computer-implemented method according to claim 9.

The advantages of this method, as well as the preferred embodiments thereof, are apparent from the discussion above with reference to the proposed control unit.

Further advantages, beneficial features and applications of the present invention will be apparent from the following description and the dependent claims.

### BRIEF DESCRIPTION OF THE DRAWINGS

The invention is now to be explained more closely by means of preferred embodiments, which are disclosed as examples, and with reference to the attached drawings.
- Figure 1: schematically illustrates a milk handling system including a control unit according to one embodiment of the invention;
- Figure 2: shows a diagram exemplifying a relationship between a milk-flow rate and predefined threshold levels in a balance tank according to one embodiment of the invention;
- Figure 3: shows a block diagram of the control unit according to the invention; and
- Figure 4: illustrates, by means of a flow diagram, the method according to a preferred embodiment of the invention.

### DETAILED DESCRIPTION

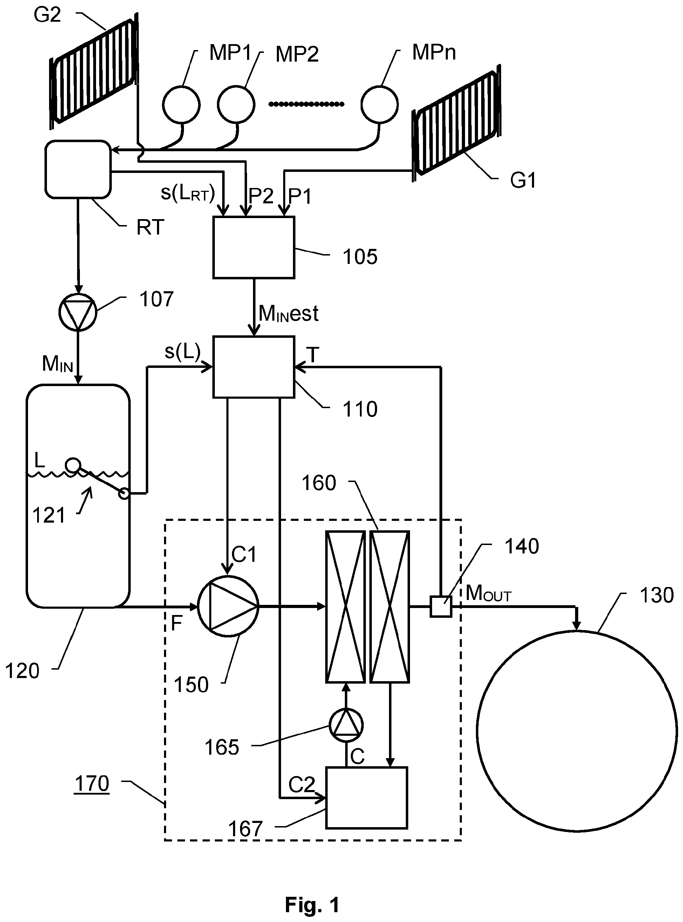

Figure 1 shows a schematic illustration of a milk handling system including a control unit 110 according to one embodiment of the invention.

The control unit 110 is arranged to control a flow of milk F through a cooling system 170 from a balance tank 120 to a storage tank 130. The storage tank 130 is adapted to accumulate milk that has been collected during a relatively long period, namely between consecutive pickups of the milk for further transport to a dairy or similar facility, which pickups typically occur every 24 or 48 hours. Consequently, the storage tank 130 has a comparatively large capacity. The balance tank 120, on the other hand, has a comparatively low capacity. Namely, here the milk is just buffered briefly before being forwarded through the cooling system 170. The balance tank 120 is adapted to receive an input M_{IN} in the form of milk having been extracted from milking animals at a number of milking points MP1, MP2, ..., MPn, for example located in a milking parlor or on a rotary milking parlor. The milking points MP1, MP2, ..., MPn may either feed milk to the balance tank 120 directly, or via one or more so-called end units/receiver tanks RT. Each of the receiver tanks RT has a relatively small storage capacity, say in the range of 50 to 200 liters. The storage capacity of each of the balance tank 120 and the storage tank 130 respectively is substantially larger than that of the receiver tank RT, and sizes typically depend on the number of milking points MP1, MP2, ..., MPn. At least one receiver pump 107 may be arranged to pump the milk collected in the receiver tank(s) RT to the balance tank 120. The receiver pump 107 is normally controlled in response to a Boolean variable, i.e. the receiver pump 107 is either on or off.

The control unit 110 is configured to receive a first level-indicating signal s(L) and a prediction parameter M_{IN}est. The first level-indicating signal s(L) reflects a milk level L in the balance tank 120. The prediction parameter M_{IN}est indicates an estimated future input M_{IN} of milk from the number of milking points MP1, MP2, ..., MPn.

Based on the first level-indicating signal s(L) and the prediction parameter M_{IN}est, the control unit 110 is configured to generate a first control signal C1 to a milk pump 150 in the cooling system 170. In response to the first control signal C1, the milk pump 150 is arranged to cause the flow of milk F to be pumped out from the balance tank 120 at a flow rate determined by the first control signal C1.

The prediction parameter M_{IN}est may for example be based on a second level-indicating signal s(L_{RT}) reflecting a milk level in the receiver tank(s) RT in which the milk from at least one, and preferably several or all, of the milking points MP1, MP2, ..., MPn is collected before being fed into the balance tank 120. Thus, the control unit 110 obtains straightforward and reliable advance information about a future input M_{IN} to be expected to the balance tank 120.

According to one embodiment of the invention, the prediction parameter M_{IN}est is based on an opening and/or closing of an entrance gate G1 in to a closed area where the milking points MP1, MP2, ..., MPn are located, typically a milking parlor, e.g. of herringbone or parallel type. Via information about the opening and/or closing of the entrance gate G1, the control unit 110 may gain information about a point in time when milking animals are entering the milking parlor and a new milking session is initiated.

Additionally, or alternatively, the prediction parameter M_{IN}est may be based on an opening and/or closing of an exit gate or neck rail(s) G2 out from the closed area, such as one or several neck rails in the milking parlor, where the milking points MP1, MP2, ..., MPn are located. Via information about the opening and/or closing of the exit gate or neck rail(s) G2, the control unit 110 may gain information about a point in time when a milking session has ended.

Of course, knowledge about start and/or end of milking sessions is important to estimate the future input M_{IN} of milk into the balance tank 120.

Additionally, or alternatively, the prediction parameter M_{IN}est may be based on information about a number of milking animals currently being attached to the milking points MP1, MP2, ..., MPn. This information may be acquired directly from identity readers and/or milking point controllers at the respective milking points MP1, MP2, ..., MPn, or via a central unit in the milking installation. Similarly, additionally or alternatively, the prediction parameter M_{IN}est may be based on information about a number of milking animals currently being detached from the milking units at the milking points MP1, MP2, ..., MPn. Knowledge about attachment and/or detachment of individual milking units to the animals enables relatively precise estimation of the future input M_{IN} of milk into the balance tank 120.

Even better estimates may be made based on information about the milk flow or milk yield from the milking animals currently delivering milk via the number of milking points MP1, MP2, ..., MPn. Therefore, it is preferable if the prediction parameter M_{IN}est is based on such information as alternative or in addition to the above. Moreover, the prediction parameter M_{IN}est may be based on information about a previous milk yield or milk flow curve of each milking animal that is currently delivering milk via the milking points MP1, MP2, ..., MPn. Namely, this enables estimation of a current milk flow from the animals at each point in time during the milking session. The information about previous milk yields and/or previous milk flow curves is preferably received from a central unit in the milking installation, which central unit is communicatively connected to a database containing this information.

According to other embodiments of the invention, the prediction parameter M_{IN}est is based on identity information relating to which milking animals that are present in the closed area where the milking points MP1, MP2, ..., MPn are located, and/or temporal data indicating an extension of a period during which milking animals have been present in the closed area where the milking points MP1, MP2, ..., MPn are located. This may not provide exactly the same degree of precision as the current or previous milk yields or previous milk flow curves. However, the identity information and the temporal data may offer a comparatively reliable basis for estimating the future input M_{IN} of milk into the balance tank 120 based upon which the milk pump 150 may be controlled in a proactive manner.

It is advantageous if the control unit 110 is configured to receive a temperature-indicating signal T from a temperature sensor 140 measuring a temperature of the flow of milk F before entering the storage tank 130, i.e. when leaving the cooling system 170 in the form of an output flow of milk M_{OUT}. The control unit 110 is further configured to generate the first control signal C1 on the further basis of the temperature-indicating signal T such that a cooling capacity of the cooling system 170 is increased if the temperature-indicating signal T reflects a milk temperature above a set temperature. Analogously, the control unit 110 is preferably also configured to generate the first control signal C1 based on the temperature-indicating signal T such that the cooling capacity of the cooling system 170 is decreased if the temperature-indicating signal T reflects a milk temperature below the set temperature. Thereby, it can be ensured that the output milk flow M_{OUT} has a suitable temperature, for example around 3.5 degrees Celsius while the energy resources are economized.

According to one embodiment of the invention, the cooling system 170 contains a heat exchanger 160 configured to transfer heat energy from the flow of milk F to a coolant C, which is circulated in a chiller 167 by means of a coolant pump 165 operating in response to a second control signal C2. In this embodiment, the control unit 110 is further configured to generate the second control signal C2 based on the first level-indicating signal s(L). Specifically, the control unit 110 is configured to generate the second control signal C2 so that a flow of the coolant C and/or the cooling capacity of the chiller 167 increases if the prediction parameter M_{IN}est indicates that the estimated future input M_{IN} of milk from the milking points MP1, MP2, ..., MPn will increase during a predefined future interval, say 30 to 90 seconds and any one of the at least two predefined threshold levels Lₘᵢₙ, L_{mid}, Lₘₐₓ will cause the milk pump 150 to pump the flow of milk F out from the balance tank 120 at a higher flow rate F₁, F₂, F₃. Analogously, the control unit 110 is configured to generate the second control signal C2 so that the flow of the coolant C and/or the cooling capacity of the chiller 167 decreases if the prediction parameter M_{IN}est indicates that the estimated future input M_{IN} of milk from the number points MP1, MP2, ..., MPn will decrease during the predefined future interval and any one of the at least two predefined threshold levels Lₘᵢₙ, L_{mid}, Lₘₐₓ will cause the milk pump 150 to pump the flow of milk F out from the balance tank 120 at a lower flow rate F₁, F₂, F₃.

The cooling capacity of the heat exchanger 160 may be controlled up and down by adjusting the temperature of the coolant C, adjusting the speed of the coolant pump 165, or both.

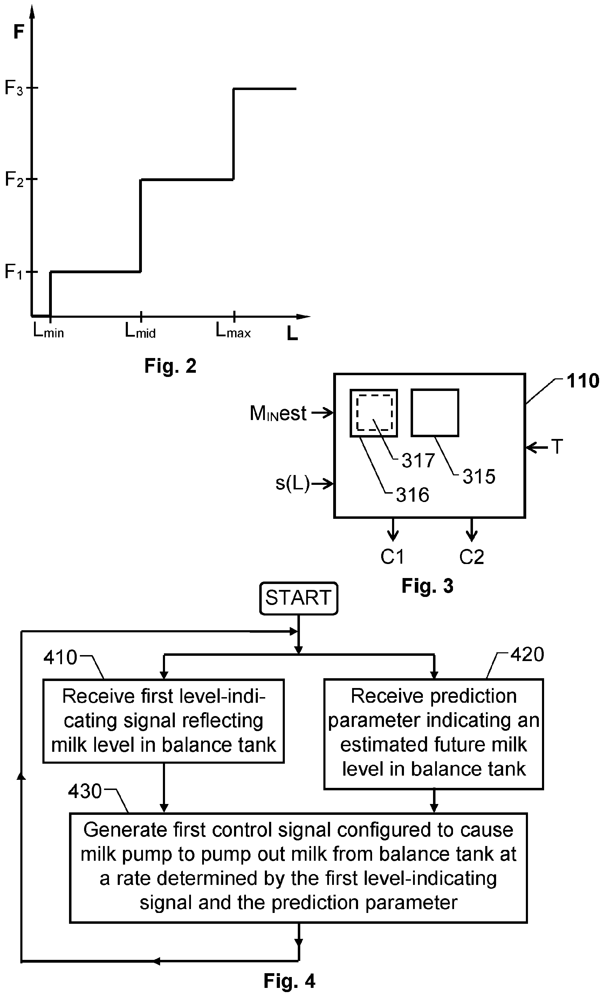

The heat exchanger 160 may contain a plate heat exchanger (PHE), and the coolant C preferably contains water and glycol. Figure 2 shows a diagram representing a relationship between a milk-flow rate F and predefined threshold levels in the balance tank 120 according to the invention. Here, the horizontal axis indicates three threshold levels Lₘᵢₙ, L_{mid} and Lₘₐₓ in relation to the milk level L measured in the balance tank 120, and the vertical axis F designates corresponding milk-flow rates F₁, F₂ and F₃ respectively at which the control unit 110 nominally will control the milk pump 150 to operate via the first control signal C1 depending on the milk level L measured in the balance tank 120. For example, a first threshold level Lₘᵢₙ may represent a level below 10 % of the storage capacity of the balance tank 120, a second threshold level L_{mid} may represent a level between 10 % and 90 % of the storage capacity of the balance tank 120 and a third threshold level Lₘₐₓ may represent a level above 90 % of the storage capacity of the balance tank 120.

According to the invention, the control unit 110 is configured to generate the first control signal C1 based on the first level-indicating signal s(L) such that an indicated milk level L in the balance tank 120 above a particular one of at least two predefined threshold levels Lₘᵢₙ, L_{mid} or Lₘₐₓ respectively causes the milk pump 150 to pump the flow of milk F out from the balance tank 120 at a respective rate F₁, F₂ or F₃ corresponding to each one of the at least two predefined threshold levels Lₘᵢₙ, L_{mid} and Lₘₐₓ. As is apparent from the diagram in Figure 2, L_{mid} is above Lₘᵢₙ and Lₘₐₓ is above L_{mid}. As is also apparent from the diagram in Figure 2, F₂ represents a higher flow rate than F₁ and F₃ represents a higher flow rate than F₂.

According to the invention, the control unit 110 is configured to generate the first control signal C1 based on the prediction parameter M_{IN}est such that the prediction parameter M_{IN}est overrides the first level-indicating signal s(L) to cause the milk pump 150 to pump the flow of milk F out from the balance tank 120 at a lower rate, say at F₁ or F₂, than the rate corresponding to the particular one of the at least two predefined threshold levels, say L_{mid} or Lₘₐₓ respectively, if the first level-indicating signal s(L) indicates that the milk level L in the balance tank 120 is above the particular one of at least two predefined threshold levels L_{mid} or Lₘₐₓ; *and* the prediction parameter M_{IN}est indicates that the estimated future input M_{IN} of milk from the milking points MP1, MP2, ..., MPn is decreasing. This means that a temporarily elevated milk level L, i.e. above L_{mid} or Lₘₐₓ, is accepted in the balance tank 120, say during a period of 30 to 90 seconds, since the control unit 110 "knows" that the milk level L will decrease soon anyway due to the decreasing input of milk M_{IN}. Thus, the milk flow rate is stabilized by avoiding an unnecessary and temporary increase in the pumping operation of the milk pump 150.

Analogously, the control unit 110 is configured to generate the first control signal C1 based on the prediction parameter M_{IN}est such that the prediction parameter M_{IN}est overrides the first level-indicating signal s(L) to cause the milk pump 150 to pump the flow of milk F out from the balance tank 120 at a higher rate, say at F₂ or F₃, than the rate corresponding to the particular one of the at least two predefined threshold levels, say Lₘᵢₙ or L_{mid}, if the first level-indicating signal s(L) indicates that the milk level L in the balance tank 120 is below the particular one of at least two predefined threshold levels Lₘᵢₙ or L_{mid}; and the prediction parameter M_{IN}est indicates that the estimated future input M_{IN} of milk from the milking points MP1, MP2, ..., MPn is increasing. This means that the milk pump 150 is kept operated at the higher rate, say during a period of 30 to 90 seconds, since the control unit 110 "knows" that the milk level L will increase soon due to the increasing input of milk M_{IN}. Thus, the milk flow rate is stabilized by avoiding an unnecessary and temporary decrease in the pumping operation of the milk pump 150.

Preferably, a backpressure sensor (not shown) is also included in the storage tank 130 or the conduit system between the storage tank 130 and the heat exchanger 160, which backpressure sensor is configured to compensate a milk pump speed to variations in the hydrostatic pressure resulting from the varying milk level in the storage tank 130. In other words, higher milk level in the storage tank 130 causes higher back pressure, which is compensated by running the milk pump 150 at relatively higher pump speed and vice versa.

The above pump speed compensation to the back pressure of the milk level in the storage tank 130 aims at maintaining a determined flow rate F of milk through the cooling system 170. Hence, if the storage tank 130 is almost empty the determined flow rate F of milk can be achieved by running the milk pump 150 at a relatively slow speed, while an almost full storage tank 130 requires the milk pump to run at relatively higher speed to push the milk into the storage tank at the determined flow rate.

Figure 3 shows a block diagram of the control unit 110 according to the invention. It is generally advantageous if the controller 110 is configured to effect the above-described procedure in an automatic manner by executing a computer program 317. Therefore, the controller 110 may include a memory unit 316, i.e. non-volatile data carrier, storing the computer program 317, which, in turn, contains software for making processing circuitry in the form of at least one processor 315 in the controller 110 execute the actions mentioned in this disclosure when the computer program 317 is run on the at least one processor 315.

In order to sum up, and with reference to the flow diagram in Figure 4, we will now describe the computer-implemented method according to one embodiment of the invention for controlling the flow of milk F through the cooling system 170 from the balance tank 120 to the storage tank 130, where the balance tank 120 receives an input M_{IN} in the form of milk extracted from the milking points MP1, MP2, ..., MPn.

In a first step 410, a first level-indicating signal s(L) is received, which first level-indicating signal s(L) reflects a milk level L in the balance tank 120.

In a second step 420, for example executed in parallel with step 410, a prediction parameter M_{IN}est is received, which prediction parameter M_{IN}est indicates an estimated future input M_{IN} of milk from the number of milking points MP1, MP2, ..., MPn.

In a step 430, after steps 410 and 420, a first control signal C1 is generated, which first control signal C1 is sent to a milk pump 150 in the cooling system 170. The milk pump 150 is arranged to cause the flow of milk F to be pumped out from the balance tank 120 at a flow rate determined by the first control signal C1.

Thereafter, the procedure loops back to steps 410 and 420.

The process steps described with reference to Figure 4 may be controlled by means of a programmed processor. The disclosure also extends to computer programs, particularly computer programs on or in a carrier, adapted for putting the invention into practice. The program may be in the form of source code, object code, a code intermediate source and object code such as in partially compiled form, or in any other form suitable for use in the implementation of the process.

The program may either be a part of an operating system, or be a separate application. The carrier may be any entity or device capable of carrying the program. For example, the carrier may comprise a storage medium, such as a Flash memory, a ROM (Read Only Memory), for example a DVD (Digital Video/Versatile Disk), a CD (Compact Disc) or a semiconductor ROM, an EPROM (Erasable Programmable Read-Only Memory), an EEPROM (Electrically Erasable Programmable Read-Only Memory), or a magnetic recording medium, for example a floppy disc or hard disc. Further, the carrier may be a transmissible carrier such as an electrical or optical signal which may be conveyed via electrical or optical cable or by radio or by other means. When the program is embodied in a signal, which may be conveyed, directly by a cable or other device or means, the carrier may be constituted by such cable or device or means. Alternatively, the carrier may be an integrated circuit in which the program is embedded, the integrated circuit being adapted for performing, or for use in the performance of, the relevant processes.

Variations to the disclosed embodiments can be understood and effected by those skilled in the art in practicing the claimed invention, from a study of the drawings, the disclosure, and the appended claims.

The term "comprises/comprising" when used in this specification is taken to specify the presence of stated features, integers, steps or components. The term does not preclude the presence or addition of one or more additional elements, features, integers, steps or components or groups thereof. The indefinite article "a" or "an" does not exclude a plurality. In the claims, the word "or" is not to be interpreted as an exclusive or (sometimes referred to as "XOR"). On the contrary, expressions such as "A or B" covers all the cases "A and not B", "B and not A" and "A and B", unless otherwise indicated. The mere fact that certain measures are recited in mutually different dependent claims does not indicate that a combination of these measures cannot be used to advantage. Any reference signs in the claims should not be construed as limiting the scope.

It is also to be noted that features from the various embodiments described herein may freely be combined, unless it is explicitly stated that such a combination would be unsuitable.

The invention is not restricted to the described embodiments in the figures, but may be varied freely within the scope of the claims.

## Claims

1. A milk handling system comprising a balance tank (120), a control unit (110) and a cooling system (170), wherein the control unit is arranged to control a flow of milk (F) through the cooling system (170) from the balance tank (120) to a storage tank (130), the balance tank (120) receiving an input (M_{IN}) in the form of milk from a number of milking points (MP1, MP2, MPn), the control unit (110) being configured to:
receive a first level-indicating signal (s(L)) indicating a milk level (L) in the balance tank (120), and based thereon
generate a first control signal (C1) to a milk pump (150) in the cooling system (170), which milk pump (150) is arranged to cause the flow of milk (F) to be pumped out from the balance tank (120) at a flow rate determined by the first control signal (C1), **characterized in that** the control unit (110) is configured to:
generate the first control signal (C1) based on the first level-indicating signal (s(L)), such that an indicated milk level (L) in the balance tank (120) above a particular one of at least two predefined threshold levels (Lmin, Lmid, Lmax) causes the milk pump (150) to pump the flow of milk (F) out from the balance tank (120) at a respective rate (F1, F2, F3) corresponding to each one of the at least two predefined threshold levels (Lmin, Lmid, Lmax),
receive a prediction parameter (M_{IN}est) indicating an estimated future input (M_{IN}) of milk from the number of milking points (MP1, MP2, MPn), and
generate the first control signal (C1) on the further basis of the prediction parameter (M_{IN}est), such that the prediction parameter (MINest) overrides the first level-indicating signal (s(L)) to cause the milk pump (150) to pump the flow of milk (F) out from the balance tank (120) at a lower rate (F1, F2) than the rate corresponding to the particular one of the at least two predefined threshold levels (Lmin, Lmid, Lmax) if
the first level-indicating signal (s(L)) indicates that the milk level (L) in the balance tank (120) is above the particular one of at least two predefined threshold levels (Lmid, Lmax) and
the prediction parameter (MINest) indicates that the estimated future input (MIN) of milk from the number of milking points (MP1, MP2, MPn) is decreasing.

2. The milk handling system according to claim 1, wherein the prediction parameter (M_{IN}est) is based on a second level-indicating signal (s(L_{RT})) reflecting a milk level in a receiver tank (RT) in which the milk from at least one, and preferably several, of the number of milking points (MP1, MP2, MPn) is collected before being fed into the balance tank (120).

3. The milk handling system according to any one of the claims 1 or 2, wherein the prediction parameter (M_{IN}est) is based on at least one of:
an opening and/or closing of an entrance gate (G1) in to a closed area where the number of milking points (MP1, MP2, MPn) are located,
an opening and/or closing of an exit gate (G2) out from the closed area where the number of milking points (MP1, MP2, MPn) are located,
information about a number of milking animals currently being attached to the number of milking points (MP1, MP2, MPn),
information about a number of milking animals currently being detached from the number of milking points (MP1, MP2, MPn),
information about a milk flow or milk yield from the milking animals currently delivering milk via the number of milking points (MP1, MP2, MPn), and
information about a previous milk yield or milk flow curve of the milking animals currently delivering milk via the number of milking points (MP1, MP2, MPn).

4. The milk handling system according to any one of the previous claims, wherein the prediction parameter (M_{IN}est) is based on at least one of:
identity information relating to which milking animals that are present in the closed area where the number of milking points (MP1, MP2, MPn) are located, and
temporal data indicating an extension of a period during which milking animals have been present in the closed area where the number of milking points (MP1, MP2, MPn) are located.

5. The milk handling system according to any one of the preceding claims, configured to generate the first control signal (C1) based on the prediction parameter (M_{IN}est) such that the prediction parameter (M_{IN}est) overrides the first level-indicating signal (s(L)) to cause the milk pump (150) to pump the flow of milk (F) out from the balance tank (120) at a higher rate (F₂, F₃) than the rate corresponding to the particular one of the at least two predefined threshold levels (Lₘᵢₙ, L_{mid}, Lₘₐₓ) if
the first level-indicating signal (s(L)) indicates that the milk level (L) in the balance tank (120) is below the particular one of at least two predefined threshold levels (Lₘᵢₙ, L_{mid}) and
the prediction parameter (M_{IN}est) indicates that the estimated future input (M_{IN}) of milk from the number of milking points (MP1, MP2, MPn) is increasing.

6. The milk handling system according to any one of the preceding claims, further configured to:
receive a temperature-indicating signal (T) from a temperature sensor (140) measuring a temperature of the flow of milk (F) before entering the storage tank (130); and
generate the first control signal (C1) on the further basis of the temperature-indicating signal (T) such that a cooling capacity of the cooling system (170) is increased if the temperature-indicating signal (T) reflects a milk temperature above a set temperature.

7. The milk handling system according to claim 6, configured to generate the first control signal (C1) based on the temperature-indicating signal (T) such that the cooling capacity of the cooling system (170) is decreased if the temperature-indicating signal (T) reflects a milk temperature below the set temperature.

8. The milk handling system according to any one of the preceding claims, wherein the cooling system (170) comprises a heat exchanger (160) configured to transfer heat energy from the flow of milk (F) to a coolant (C) being circulated in a chiller (167) by means of a coolant pump (165) operating in response to a second control signal (C2), and the control unit (110) is further configured to generate the second control signal (C2) based on the first level-indicating signal (s(L)) so that:
a flow of the coolant (C) and/or the cooling capacity of the chiller (167) increases if the prediction parameter (M_{IN}est) indicates that the estimated future input (M_{IN}) of milk from the number of milking points (MP1, MP2, MPn) will increase during a predefined future interval and any one of the at least two predefined threshold levels (Lₘᵢₙ, L_{mid}, Lₘₐₓ) will cause the milk pump (150) to pump the flow of milk (F) out from the balance tank (120) at a higher flow rate (F₁, F₂, F₃), and
the flow of the coolant (C) and/or the cooling capacity of the chiller (167) decreases if the prediction parameter (M_{IN}est) indicates that the estimated future input (M_{IN}) of milk from the number of milking points (MP1, MP2, MPn) will decrease during the predefined future interval and any one of the at least two predefined threshold levels (Lₘᵢₙ, L_{mid}, Lₘₐₓ) will cause the milk pump (150) to pump the flow of milk (F) out from the balance tank (120) at a lower flow rate (F₁, F₂, F₃).

9. A computer-implemented method for controlling a flow of milk (F) through a cooling system (170) from a balance tank (120) to a storage tank (130), the balance tank (120) receiving an input (M_{IN}) in the form of milk from a number of milking points (MP1, MP2, MPn), the method comprising:
receiving a first level-indicating signal (s(L)) indicating a milk level (L) in the balance tank (120), and based thereon
generating a first control signal (C1) to a milk pump (150) in the cooling system (170), which milk pump (150) is arranged to cause the flow of milk (F) to be pumped out from the balance tank (120) at a flow rate determined by the first control signal (C1), **characterized by:**
generating the first control signal (C1) based on the first level-indicating signal (s(L)) such that an indicated milk level (L) in the balance tank (120) above a particular one of at least two predefined threshold levels (Lmin, Lmid, Lmax) causes the milk pump (150) to pump the flow of milk (F) out from the balance tank (120) at a respective rate (F1, F2, F3) corresponding to each one of the at least two predefined threshold levels (Lmin, Lmid, Lmax),
receiving a prediction parameter (M_{IN}est) indicating an estimated future input (M_{IN}) of milk from the number of milking points (MP1, MP2, MPn), and
generating the first control signal (C1) on the further basis of the prediction parameter (M_{IN}est), such that the prediction parameter (MINest) overrides the first level-indicating signal (s(L)) to cause the milk pump (150) to pump the flow of milk (F) out from the balance tank (120) at a lower rate (F1, F2) than the rate corresponding to the particular one of the at least two predefined threshold levels (Lmin, Lmid, Lmax) if
the first level-indicating signal (s(L)) indicates that the milk level (L) in the balance tank (120) is above the particular one of at least two predefined threshold levels (Lmid, Lmax) and
the prediction parameter (MINest) indicates that the estimated future input (MIN) of milk from the number of milking points (MP1, MP2, MPn) is decreasing.

10. The method according to claim 9, wherein the prediction parameter (M_{IN}est) is based on a second level-indicating signal (s(L_{RT})) reflecting a milk level in a receiver tank (RT) in which the milk from at least one, and preferably several, of the number of milking points (MP1, MP2, MPn) is collected before being fed into the balance tank (120).

11. The method according to any one of the claims 9 or 10, wherein the prediction parameter (M_{IN}est) is based on at least one of:
an opening and/or closing of an entrance gate (G1) in to a closed area where the number of milking points (MP1, MP2, MPn) are located, and
an opening and/or closing of an exit gate (G2) out from the closed area where the number of milking points (MP1, MP2, MPn) are located,
information about a number of milking animals currently being attached to the number of milking points (MP1, MP2, MPn),
information about a number of milking animals currently being detached from the number of milking points (MP1, MP2, MPn),
information about a milk flow or milk yield from the milking animals currently delivering milk via the number of milking points (MP1, MP2, MPn), and
information about a previous milk yield or milk flow curve of the milking animals currently delivering milk via the number of milking points (MP1, MP2, MPn).

12. The method according to any one of the claims 9 to 11, wherein the prediction parameter (M_{IN}est) is based on at least one of:
identity information relating to which milking animals that are present in the closed area where the number of milking points (MP1, MP2, MPn) are located, and
temporal data indicating an extension of a period during which milking animals have been present in the closed area where the number of milking points (MP1, MP2, MPn) are located.

13. The method according to any one of the claims 9 to 12, comprising:
generating the first control signal (C1) based on the prediction parameter (M_{IN}est) such that the prediction parameter (M_{IN}est) overrides the first level-indicating signal (s(L)) to cause the milk pump (150) to pump the flow of milk (F) out from the balance tank (120) at a higher rate (F₂, F₃) than the rate corresponding to the particular one of the at least two predefined threshold levels (Lₘᵢₙ, L_{mid}, Lₘₐₓ) if
the first level-indicating signal (s(L)) indicates that the milk level (L) in the balance tank (120) is below the particular one of at least two predefined threshold levels (Lₘᵢₙ, L_{mid}) and
the prediction parameter (M_{IN}est) indicates that the estimated future input (M_{IN}) of milk from the number of milking points (MP1, MP2, MPn) is increasing.

14. The method according to any one of the claims 9 to 13, further comprising:
receiving a temperature-indicating signal (T) from a temperature sensor (140) measuring a temperature of the flow of milk (F) before entering the storage tank (130); and
generating the first control signal (C1) on the further basis of the temperature-indicating signal (T) such that a cooling capacity of the cooling system (170) is increased if the temperature-indicating signal (T) reflects a milk temperature above a set temperature.

15. The method according to claim 14, comprising:
generating the first control signal (C1) based on the temperature-indicating signal (T) such that the cooling capacity of the cooling system (170) is decreased if the temperature-indicating signal (T) reflects a milk temperature below the set temperature.

16. The method according to any one of the claims 9 to 15, wherein the cooling system (170) comprises a heat exchanger (160) configured to transfer heat energy from the flow of milk (F) to a coolant (C) being circulated in a chiller (167) by means of a coolant pump (165) operating in response to a second control signal (C2), and the method further comprises generating the second control signal (C2) based on the first level-indicating signal (s(L)) so that:
a flow of the coolant (C) and/or the cooling capacity of the chiller (167) increases if the prediction parameter (M_{IN}est) indicates that the estimated future input (M_{IN}) of milk from the number of milking points (MP1, MP2, MPn) will increase during a predefined future interval and any one of the at least two predefined threshold levels (Lₘᵢₙ, L_{mid}, Lₘₐₓ) will cause the milk pump (150) to pump the flow of milk (F) out from the balance tank (120) at a higher flow rate (F₁, F₂, F₃), and
the flow of the coolant (C) and/or the cooling capacity of the chiller (167) decreases if the prediction parameter (M_{IN}est) indicates that the estimated future input (M_{IN}) of milk from the number of milking points (MP1, MP2, MPn) will decrease during the predefined future interval and any one of the at least two predefined threshold levels (Lₘᵢₙ, L_{mid}, Lₘₐₓ) will cause the milk pump (150) to pump the flow of milk (F) out from the balance tank (120) at a lower flow rate (F₁, F₂, F₃).

## Patentansprüche

1. Milchhandhabungssystem, umfassend einen Ausgleichstank (120), eine Steuereinheit (110) und ein Kühlsystem (170), wobei die Steuereinheit angeordnet ist, um einen Milchfluss (F) durch das Kühlsystem (170) aus dem Ausgleichstank (120) zu einem Lagertank (130) zu steuern, wobei der Ausgleichstank (120) eine Eingabe (M_{IN}) in Form von Milch von einer Anzahl von Melkplätzen (MP1, MP2, MPn) empfängt, wobei die Steuereinheit (110) konfiguriert ist zum:
Empfangen eines ersten pegelanzeigenden Signals (s(L)), das einen Milchpegel (L) in dem Ausgleichstank (120) anzeigt, und basierend darauf
Erzeugen eines ersten Steuersignals (C1) an eine Milchpumpe (150) in dem Kühlsystem (170), wobei die Milchpumpe (150) angeordnet ist, um zu bewirken, dass der Milchfluss (F) aus dem Ausgleichstank (120) mit einer Durchflussgeschwindigkeit herausgepumpt wird, die durch das erste Steuersignal (C1) bestimmt wird,
**dadurch gekennzeichnet, dass** die Steuereinheit (110) konfiguriert ist zum:
Erzeugen des ersten Steuersignals (C1) basierend auf dem ersten pegelanzeigenden Signal (s(L)) derart, dass ein angezeigter Milchpegel (L) in dem Ausgleichstank (120) oberhalb eines gewissen von mindestens zwei vordefinierten Schwellenpegeln (Lmin, Lmid, Lmax) bewirkt, dass die Milchpumpe (150) den Milchfluss (F) aus dem Ausgleichstank (120) mit einer jeweiligen Geschwindigkeit (F1, F2, F3) herauspumpt, die jedem der mindestens zwei vordefinierten Schwellenpegel (Lmin, Lmid, Lmax) entspricht,
Empfangen eines Vorhersageparameters (M_{IN}est), der eine geschätzte zukünftige Eingabe (M_{IN}) von Milch von der Anzahl von Melkplätzen (MP1, MP2, MPn) anzeigt, und
Erzeugen des ersten Steuersignals (C1) auf der weiteren Basis des Vorhersageparameters (M_{IN}est) derart, dass der Vorhersageparameter (MINest) das erste pegelanzeigende Signal (s(L)) übersteuert, um zu bewirken, dass die Milchpumpe (150) den Milchfluss (F) aus dem Ausgleichstank (120) mit einer niedrigeren Geschwindigkeit (F1, F2) als der Geschwindigkeit herauspumpt, die dem gewissen der mindestens zwei vordefinierten Schwellenpegel (Lmin, Lmid, Lmax) entspricht, falls das erste pegelanzeigende Signal (s(L)) anzeigt, dass der Milchpegel (L) in dem Ausgleichstank (120) oberhalb des gewissen von mindestens zwei vordefinierten Schwellenpegeln (Lmid, Lmax) liegt, und
der Vorhersageparameter (MINest) anzeigt, dass sich die geschätzte zukünftige Eingabe (MIN) von Milch von der Anzahl von Melkplätzen (MP1, MP2, MPn) verringert.

2. Milchhandhabungssystem nach Anspruch 1, wobei der Vorhersageparameter (M_{IN}est) auf einem zweiten pegelanzeigenden Signal (S(L_{RT})) basiert, das einen Milchpegel in einem Empfangstank (RT) widerspiegelt, in dem die Milch von mindestens einem und vorzugsweise mehreren der Anzahl von Melkplätzen (MP1, MP2, MPn) gesammelt wird, bevor sie in den Ausgleichstank (120) eingespeist wird.

3. Milchhandhabungssystem nach einem der Ansprüche 1 oder 2, wobei der Vorhersageparameter (M_{IN}est) auf mindestens einem basiert von:
einem Öffnen und/oder Schließen eines Eingangstors (G1) in einen geschlossenen Bereich, in dem sich die Anzahl von Melkplätzen (MP1, MP2, MPn) befindet,
einem Öffnen und/oder Schließen eines Ausgangstors (G2) aus dem geschlossenen Bereich, in dem sich die Anzahl von Melkplätzen (MP1, MP2, MPn) befindet,
Informationen über eine Anzahl von Melktieren, die aktuell an die Anzahl von Melkplätzen (MP1, MP2, MPn) angeschlossen werden,
Informationen über eine Anzahl von Melktieren, die aktuell von der Anzahl von Melkplätzen (MP1, MP2, MPn) losgemacht werden,
Informationen über einen Milchfluss oder eine Milchmenge von den Melktieren, die aktuell über die Anzahl von Melkplätzen (MP1, MP2, MPn) Milch abgeben, und
Informationen über eine frühere Milchmenge oder Milchflusskurve der Melktiere, die aktuell über die Anzahl von Melkplätzen (MP1, MP2, MPn) Milch abgeben.

4. Milchhandhabungssystem nach einem der vorstehenden Ansprüche, wobei der Vorhersageparameter (M_{IN}est) auf mindestens einem basiert von:
Identitätsinformationen in Bezug darauf, welche Melktiere in dem geschlossenen Bereich anwesend sind, in dem sich die Anzahl von Melkplätzen (MP1, MP2, MPn) befindet, und
zeitlichen Daten, die eine Verlängerung eines Zeitraums anzeigen, während dessen Melktiere in dem geschlossenen Bereich anwesend waren, in dem sich die Anzahl von Melkplätzen (MP1, MP2, MPn) befindet.

5. Milchhandhabungssystem nach einem der vorstehenden Ansprüche, das konfiguriert ist, um das erste Steuersignal (C1) basierend auf dem Vorhersageparameter (M_{IN}est) derart zu erzeugen, dass der Vorhersageparameter (M_{IN}est) das erste pegelanzeigende Signal (s(L)) übersteuert, um zu bewirken, dass die Milchpumpe (150) den Milchfluss (F) aus dem Ausgleichstank (120) mit einer höheren Geschwindigkeit (F₂, F₃) als der Geschwindigkeit herauspumpt, die dem gewissen der mindestens zwei vordefinierten Schwellenpegel (Lₘᵢₙ, L_{mid}, Lₘₐₓ) entspricht, falls
das erste pegelanzeigende Signal (s(L)) anzeigt, dass der Milchpegel (L) in dem Ausgleichstank (120) unterhalb des gewissen von mindestens zwei vordefinierten Schwellenpegeln (Lₘᵢₙ, L_{mid}) liegt, und
der Vorhersageparameter (M_{IN}est) anzeigt, dass sich die geschätzte zukünftige Eingabe (M_{IN}) von Milch von der Anzahl von Melkplätzen (MP1, MP2, MPn) erhöht.

6. Milchhandhabungssystem nach einem der vorstehenden Ansprüche, das ferner konfiguriert ist zum:
Empfangen eines temperaturanzeigenden Signals (T) von einem Temperatursensor (140), der eine Temperatur des Milchflusses (F) vor einem Eintreten in den Lagertank (130) misst; und
Erzeugen des ersten Steuersignals (C1) auf der weiteren Basis des temperaturanzeigenden Signals (T) derart, dass eine Kühlkapazität des Kühlsystems (170) erhöht wird, falls das temperaturanzeigende Signal (T) eine Milchtemperatur oberhalb einer eingestellten Temperatur widerspiegelt.

7. Milchhandhabungssystem nach Anspruch 6, das konfiguriert ist, um das erste Steuersignal (C1) basierend auf dem temperaturanzeigenden Signal (T) derart zu erzeugen, dass die Kühlkapazität des Kühlsystems (170) verringert wird, falls das temperaturanzeigende Signal (T) eine Milchtemperatur unterhalb der eingestellten Temperatur widerspiegelt.

8. Milchhandhabungssystem nach einem der vorstehenden Ansprüche, wobei das Kühlsystem (170) einen Wärmetauscher (160) umfasst, der konfiguriert ist, um Wärmeenergie von dem Milchstrom (F) auf ein Kühlmittel (C) zu übertragen, das in einer Kältemaschine (167) mittels einer Kühlmittelpumpe (165) zirkuliert wird, die als Reaktion auf ein zweites Steuersignal (C2) arbeitet, und die Steuereinheit (110) ferner konfiguriert ist, um das zweite Steuersignal (C2) basierend auf dem ersten pegelanzeigenden Signal (s(L)) zu erzeugen, sodass:
sich ein Fluss des Kühlmittels (C) und/oder die Kühlkapazität der Kältemaschine (167) erhöht, falls der Vorhersageparameter (M_{IN}est) anzeigt, dass sich die geschätzte zukünftige Eingabe (M_{IN}) von Milch von der Anzahl von Melkplätzen (MP1, MP2, MPn) während eines vordefinierten zukünftigen Intervalls erhöhen wird und ein beliebiger der mindestens zwei vordefinierten Schwellenpegel (Lₘᵢₙ, L_{mid}, Lₘₐₓ) bewirken wird, dass die Milchpumpe (150) den Milchfluss (F) mit einer höheren Durchflussgeschwindigkeit (F₁, F₂, F₃) aus dem Ausgleichstank (120) herauspumpt, und
sich der Fluss des Kühlmittels (C) und/oder die Kühlkapazität der Kältemaschine (167) verringert, falls der Vorhersageparameter (M_{IN}est) anzeigt, dass sich die geschätzte zukünftige Eingabe (M_{IN}) von Milch von der Anzahl von Melkplätzen (MP1, MP2, MPn) während des vordefinierten zukünftigen Intervalls verringern wird und ein beliebiger der mindestens zwei vordefinierten Schwellenpegel (Lₘᵢₙ, L_{mid}, Lₘₐₓ) bewirken wird, dass die Milchpumpe (150) den Milchfluss (F) aus dem Ausgleichstank (120) mit einer niedrigeren Durchflussgeschwindigkeit (F₁, F₂, F₃) herauspumpt.

9. Computerimplementiertes Verfahren zum Steuern eines Milchflusses (F) durch ein Kühlsystem (170) von einem Ausgleichstank (120) zu einem Lagertank (130), wobei der Ausgleichstank (120) eine Eingabe (M_{IN}) in Form von Milch von einer Anzahl von Melkplätzen (MP1, MP2, MPn) empfängt, das Verfahren umfassend:
Empfangen eines ersten pegelanzeigenden Signals (s(L)), das einen Milchpegel (L) in dem Ausgleichstank (120) anzeigt, und darauf basierend
Erzeugen eines ersten Steuersignals (C1) an eine Milchpumpe (150) in dem Kühlsystem (170), wobei die Milchpumpe (150) angeordnet ist, um zu bewirken, dass der Milchfluss (F) aus dem Ausgleichstank (120) mit einer Durchflussgeschwindigkeit herausgepumpt wird, die durch das erste Steuersignal (C1) bestimmt wird, **gekennzeichnet durch**:
Erzeugen des ersten Steuersignals (C1) basierend auf dem ersten pegelanzeigenden Signal (s(L)) derart, dass ein angezeigter Milchpegel (L) in dem Ausgleichstank (120) oberhalb eines gewissen von mindestens zwei vordefinierten Schwellenpegeln (Lmin, Lmid, Lmax) bewirkt, dass die Milchpumpe (150) den Milchfluss (F) aus dem Ausgleichstank (120) mit einer jeweiligen Geschwindigkeit (F1, F2, F3) herauspumpt, die jedem der mindestens zwei vordefinierten Schwellenpegel (Lmin, Lmid, Lmax) entspricht,
Empfangen eines Vorhersageparameters (M_{IN}est), der eine geschätzte zukünftige Eingabe (M_{IN}) von Milch von der Anzahl von Melkplätzen (MP1, MP2, MPn) anzeigt, und
Erzeugen des ersten Steuersignals (C1) auf der weiteren Basis des Vorhersageparameters (M_{IN}est) derart, dass der Vorhersageparameter (MINest) das erste pegelanzeigende Signal (s(L)) übersteuert, um zu bewirken, dass die Milchpumpe (150) den Milchfluss (F) aus dem Ausgleichstank (120) mit einer niedrigeren Geschwindigkeit (F1, F2) als der Geschwindigkeit herauspumpt, die dem gewissen der mindestens zwei vordefinierten Schwellenpegel (Lmin, Lmid, Lmax) entspricht, falls das erste pegelanzeigende Signal (s(L)) anzeigt, dass der Milchpegel (L) in dem Ausgleichstank (120) oberhalb des gewissen von mindestens zwei vordefinierten Schwellenpegeln (Lmid, Lmax) liegt, und
wobei der Vorhersageparameter (MINest) anzeigt, dass sich die geschätzte zukünftige Eingabe (MIN) von Milch von der Anzahl von Melkplätzen (MP1, MP2, MPn) verringert.

10. Verfahren nach Anspruch 9, wobei der Vorhersageparameter (M_{IN}est) auf einem zweiten pegelanzeigenden Signal (S(L_{RT})) basiert, das einen Milchpegel in einem Empfangstank (RT) widerspiegelt, in dem die Milch von mindestens einem und vorzugsweise mehreren der Anzahl von Melkplätzen (MP1, MP2, MPn) gesammelt wird, bevor sie in den Ausgleichstank (120) eingespeist wird.

11. Verfahren nach einem der Ansprüche 9 oder 10, wobei der Vorhersageparameter (M_{IN}est) auf mindestens einem basiert von:
einem Öffnen und/oder Schließen eines Eingangstors (G1) in einen geschlossenen Bereich, in dem sich die Anzahl von Melkplätzen (MP1, MP2, MPn) befindet, und
einem Öffnen und/oder Schließen eines Ausgangstors (G2) aus dem geschlossenen Bereich, in dem sich die Anzahl von Melkplätzen (MP1, MP2, MPn) befindet,
Informationen über eine Anzahl von Melktieren, die aktuell an die Anzahl von Melkplätzen (MP1, MP2, MPn) angeschlossen werden,
Informationen über eine Anzahl von Melktieren, die aktuell von der Anzahl von Melkplätzen (MP1, MP2, MPn) losgemacht werden,
Informationen über einen Milchfluss oder eine Milchmenge von den Melktieren, die aktuell über die Anzahl von Melkplätzen (MP1, MP2, MPn) Milch abgeben, und
Informationen über eine frühere Milchmenge oder Milchflusskurve der Melktiere, die aktuell über die Anzahl von Melkplätzen (MP1, MP2, MPn) Milch abgeben.

12. Verfahren nach einem der Ansprüche 9 bis 11, wobei der Vorhersageparameter (M_{IN}est) auf mindestens einem basiert von:
Identitätsinformationen in Bezug darauf, welche Melktiere in dem geschlossenen Bereich anwesend sind, in dem sich die Anzahl von Melkplätzen (MP1, MP2, MPn) befindet, und
zeitlichen Daten, die eine Verlängerung eines Zeitraums anzeigen, während dessen Melktiere in dem geschlossenen Bereich anwesend waren, in dem sich die Anzahl von Melkplätzen (MP1, MP2, MPn) befindet.

13. Verfahren nach einem der Ansprüche 9 bis 12, umfassend:
Erzeugen des ersten Steuersignals (C1) basierend auf dem Vorhersageparameter (M_{IN}est) derart, dass der Vorhersageparameter (M_{IN}est) das erste pegelanzeigende Signal (s(L)) übersteuert, um zu bewirken, dass die Milchpumpe (150) den Milchfluss (F) aus dem Ausgleichstank (120) mit einer höheren Geschwindigkeit (F₂, F₃) als der Geschwindigkeit herauspumpt, die dem gewissen der mindestens zwei vordefinierten Schwellenpegel (Lₘᵢₙ, L_{mid}, Lₘₐₓ) entspricht, falls
das erste pegelanzeigende Signal (s(L)) anzeigt, dass der Milchpegel (L) in dem Ausgleichstank (120) unterhalb des gewissen von mindestens zwei vordefinierten Schwellenpegeln (Lₘᵢₙ, L_{mid}) liegt, und
der Vorhersageparameter (M_{IN}est) anzeigt, dass sich die geschätzte zukünftige Eingabe (M_{IN}) von Milch von der Anzahl von Melkplätzen (MP1, MP2, MPn) erhöht.

14. Verfahren nach einem der Ansprüche 9 bis 13, ferner umfassend:
Empfangen eines temperaturanzeigenden Signals (T) von einem Temperatursensor (140), der eine Temperatur des Milchflusses (F) vor dem Eintreten in den Lagertank (130) misst; und
Erzeugen des ersten Steuersignals (C1) auf der weiteren Basis des temperaturanzeigenden Signals (T) derart, dass eine Kühlkapazität des Kühlsystems (170) erhöht wird, falls das temperaturanzeigende Signal (T) eine Milchtemperatur oberhalb einer eingestellten Temperatur widerspiegelt.

15. Verfahren nach Anspruch 14, umfassend:
Erzeugen des ersten Steuersignals (C1) basierend auf dem temperaturanzeigenden Signal (T) derart, dass die Kühlkapazität des Kühlsystems (170) verringert wird, falls das temperaturanzeigende Signal (T) eine Milchtemperatur unterhalb der eingestellten Temperatur widerspiegelt.

16. Verfahren nach einem der Ansprüche 9 bis 15, wobei das Kühlsystem (170) einen Wärmetauscher (160) umfasst, der konfiguriert ist, um Wärmeenergie von dem Milchfluss (F) auf ein Kühlmittel (C) zu übertragen, das in einer Kältemaschine (167) mittels einer Kühlmittelpumpe (165) zirkuliert wird, die als Reaktion auf ein zweites Steuersignal (C2) arbeitet, und das Verfahren ferner das Erzeugen des zweiten Steuersignals (C2) basierend auf dem ersten pegelanzeigenden Signal (s(L)) umfasst, sodass:
sich ein Fluss des Kühlmittels (C) und/oder die Kühlkapazität der Kältemaschine (167) erhöht, falls der Vorhersageparameter (M_{IN}est) anzeigt, dass sich die geschätzte zukünftige Eingabe (M_{IN}) von Milch von der Anzahl von Melkplätzen (MP1, MP2, MPn) während eines vordefinierten zukünftigen Intervalls erhöhen wird und ein beliebiger der mindestens zwei vordefinierten Schwellenpegel (Lₘᵢₙ, L_{mid}, Lₘₐₓ) bewirken wird, dass die Milchpumpe (150) den Milchfluss (F) mit einer höheren Durchflussgeschwindigkeit (F₁, F₂, F₃) aus dem Ausgleichstank (120) herauspumpt, und
sich der Fluss des Kühlmittels (C) und/oder die Kühlkapazität der Kältemaschine (167) verringert, falls der Vorhersageparameter (M_{IN}est) anzeigt, dass sich die geschätzte zukünftige Eingabe (M_{IN}) von Milch von der Anzahl von Melkplätzen (MP1, MP2, MPn) während des vordefinierten zukünftigen Intervalls verringern wird und ein beliebiger der mindestens zwei vordefinierten Schwellenpegel (Lₘᵢₙ, L_{mid}, Lₘₐₓ) bewirken wird, dass die Milchpumpe (150) den Milchfluss (F) aus dem Ausgleichstank (120) mit einer niedrigeren Durchflussgeschwindigkeit (F₁, F₂, F₃) herauspumpt.

## Revendications

1. Système de traitement de lait comprenant un réservoir d'équilibrage (120), une unité de commande (110) et un système de refroidissement (170), dans lequel l'unité de commande est agencée pour commander un écoulement de lait (F) à travers le système de refroidissement (170) à partir du réservoir d'équilibrage (120) jusqu'à un réservoir de stockage (130), le réservoir d'équilibrage (120) recevant un intrant (M_{IN}) sous la forme de lait provenant d'un nombre de points de traite (MP1, MP2, MPn), l'unité de commande (110) étant configurée pour :
recevoir un premier signal indicateur de niveau (s(L)) indiquant un niveau de lait (L) dans le réservoir d'équilibrage (120), et en fonction de cela
générer un premier signal de commande (C1) vers une pompe à lait (150) dans le système de refroidissement (170), cette pompe à lait (150) étant agencée pour amener l'écoulement de lait (F) à être pompé à l'extérieur du réservoir d'équilibrage (120) à un débit d'écoulement déterminé par le premier signal de commande (C1), **caractérisé en ce que** l'unité de commande (110) est configurée pour :
générer le premier signal de commande (C1) en fonction du premier signal indicateur de niveau (s(L)), de telle sorte qu'un niveau de lait (L) indiqué dans le réservoir d'équilibrage (120) au-dessus d'un particulier parmi au moins deux niveaux seuil prédéfinis (Lmin, Lmid, Lmax) amène la pompe à lait (150) à pomper l'écoulement de lait (F) à l'extérieur du réservoir d'équilibrage (120) à un débit (F1, F2, F3) respectif correspondant à chacun des au moins deux niveaux seuil prédéfinis (Lmin, Lmid, Lmax),
recevoir un paramètre de prédiction (M_{IN}est) indiquant un intrant futur estimé (M_{IN}) de lait provenant du nombre de points de traite (MP1, MP2, MPn), et
générer le premier signal de commande (C1) en fonction en outre du paramètre de prédiction (M_{IN}est), de telle sorte que le paramètre de prédiction (MINest) prend le pas sur le premier signal indicateur de niveau (s(L)) pour amener la pompe à lait (150) à pomper l'écoulement de lait (F) à l'extérieur du réservoir d'équilibrage (120) à un débit plus faible (F1, F2) que le débit correspondant au particulier des au moins deux niveaux seuil prédéfinis (Lmin, Lmid, Lmax) si le premier signal indicateur de niveau (s(L)) indique que le niveau de lait (L) dans le réservoir d'équilibrage (120) est au-dessus du particulier des au moins deux niveaux seuil prédéfinis (Lmid, Lmax) et
le paramètre de prédiction (MINest) indique que l'intrant futur estimé (MIN) de lait provenant du nombre de points de traite (MP1, MP2, MPn) est en diminution.

2. Système de traitement de lait selon la revendication 1, dans lequel le paramètre de prédiction (M_{IN}est) est en fonction d'un second signal indicateur de niveau (S(L_{RT})) reflétant un niveau de lait dans un réservoir récepteur (RT) dans lequel le lait provenant d'au moins l'un, et de préférence de plusieurs, du nombre de points de traite (MP1, MP2, MPn) est collecté avant d'être alimenté dans le réservoir d'équilibrage (120).

3. Système de traitement de lait selon l'une quelconque des revendications 1 ou 2, dans lequel le paramètre de prédiction (M_{IN}est) est en fonction d'au moins l'une parmi :
une ouverture et/ou fermeture d'une porte d'entrée (G1) vers une zone fermée où le nombre de points de traite (MP1, MP2, MPn) sont localisés,
une ouverture et/ou fermeture d'une porte de sortie (G2) vers l'extérieur de la zone fermée où le nombre de points de traite (MP1, MP2, MPn) sont localisés,
des informations concernant un nombre d'animaux laitiers étant actuellement attachés au nombre de points de traite (MP1, MP2, MPn),
des informations concernant un nombre d'animaux laitiers étant actuellement détachés du nombre de points de traite (MP1, MP2, MPn),
des informations concernant un écoulement de lait ou un rendement de lait provenant des animaux laitiers délivrant actuellement du lait par l'intermédiaire du nombre de points de traite (MP1, MP2, MPn), et
des informations concernant une courbe précédente de rendement de lait ou d'écoulement de lait des animaux laitiers délivrant actuellement du lait par l'intermédiaire du nombre de points de traite (MP1, MP2, MPn).

4. Système de traitement de lait selon l'une quelconque des revendications précédentes, dans lequel le paramètre de prédiction (M_{IN}est) est en fonction d'au moins l'une parmi :
des informations d'identité se rapportant aux animaux laitiers qui sont présents dans la zone fermée où le nombre de points de traite (MP1, MP2, MPn) sont localisés, et
des données temporelles indiquant une sortie d'une période pendant laquelle des animaux laitiers ont été présents dans la zone fermée où le nombre de points de traite (MP1, MP2, MPn) sont localisés.

5. Système de traitement de lait selon l'une quelconque des revendications précédentes, configuré pour générer le premier signal de commande (C1) en fonction du paramètre de prédiction (M_{IN}est) de telle sorte que le paramètre de prédiction (M_{IN}est) prend le pas sur le premier signal indicateur de niveau (s(L)) pour amener la pompe à lait (150) à pomper l'écoulement de lait (F) à l'extérieur du réservoir d'équilibrage (120) à un débit plus élevé (F₂, F₃) que le débit correspondant au particulier des au moins deux niveaux seuil prédéfinis (Lₘᵢₙ, L_{mid}, Lₘₐₓ) si
le premier signal indicateur de niveau (s(L)) indique que le niveau de lait (L) dans le réservoir d'équilibrage (120) est inférieur au particulier des au moins deux niveaux seuil prédéfinis (Lₘᵢₙ, L_{mid}) et
le paramètre de prédiction (M_{IN}est) indique que l'intrant futur estimé (M_{IN}) de lait provenant du nombre de points de traite (MP1, MP2, MPn) est en augmentation.

6. Système de traitement de lait selon l'une quelconque des revendications précédentes, configuré en outre pour :
recevoir un signal indicateur de température (T) provenant d'un capteur de température (140) mesurant une température de l'écoulement de lait (F) avant son entrée dans le réservoir de stockage (130) ; et
générer le premier signal de commande (C1) en fonction en outre du signal indicateur de température (T) de telle sorte qu'une capacité de refroidissement du système de refroidissement (170) est augmentée si le signal indicateur de température (T) reflète une température de lait au-dessus d'une température de consigne.

7. Système de traitement de lait selon la revendication 6, configuré pour générer le premier signal de commande (C1) en fonction du signal indicateur de température (T) de telle sorte que la capacité de refroidissement du système de refroidissement (170) est diminuée si le signal indicateur de température (T) reflète une température de lait en dessous de la température de consigne.

8. Système de traitement de lait selon l'une quelconque des revendications précédentes, dans lequel le système de refroidissement (170) comprend un échangeur de chaleur (160) conçu pour transférer de l'énergie thermique de l'écoulement de lait (F) vers un liquide de refroidissement (C) étant mis en circulation dans un refroidisseur (167) au moyen d'une pompe à liquide de refroidissement (165) fonctionnant en réponse à un second signal de commande (C2), et l'unité de commande (110) est configurée en outre pour générer le second signal de commande (C2) en fonction du premier signal indicateur de niveau (s(L)) de sorte que :
un écoulement du liquide de refroidissement (C) et/ou la capacité de refroidissement du refroidisseur (167) augmentent si le paramètre de prédiction (M_{IN}est) indique que l'intrant futur estimé (M_{IN}) de lait provenant du nombre de points de traite (MP1, MP2, MPn) va augmenter pendant un intervalle futur prédéfini et que l'un quelconque des au moins deux niveaux seuil prédéfinis (Lₘᵢₙ, L_{mid}, Lₘₐₓ) va amener la pompe à lait (150) à pomper l'écoulement de lait (F) à l'extérieur du réservoir d'équilibrage (120) à un débit d'écoulement plus élevé (F₁, F₂, F₃), et
l'écoulement du liquide de refroidissement (C) et/ou la capacité de refroidissement du refroidisseur (167) diminuent si le paramètre de prédiction (M_{IN}est) indique que l'intrant futur estimé (M_{IN}) de lait provenant du nombre de points de traite (MP1, MP2, MPn) va diminuer pendant l'intervalle futur prédéfini et l'un quelconque des au moins deux niveaux seuil prédéfinis (Lₘᵢₙ, L_{mid}, Lₘₐₓ) va amener la pompe à lait (150) à pomper l'écoulement de lait (F) à l'extérieur du réservoir d'équilibrage (120) à un débit d'écoulement plus faible (F₁, F₂, F₃).

9. Procédé implémenté par ordinateur permettant de commander un écoulement de lait (F) à travers un système de refroidissement (170) à partir d'un réservoir d'équilibrage (120) jusqu'à un réservoir de stockage (130), le réservoir d'équilibrage (120) recevant un intrant (M_{IN}) sous la forme de lait provenant d'un nombre de points de traite (MP1, MP2, MPn), le procédé comprenant :
la réception d'un premier signal indicateur de niveau (s(L)) indiquant un niveau de lait (L) dans le réservoir d'équilibrage (120), et en fonction de cela
la génération d'un premier signal de commande (C1) vers une pompe à lait (150) dans le système de refroidissement (170), cette pompe à lait (150) étant agencée pour amener l'écoulement de lait (F) à être pompé à l'extérieur du réservoir d'équilibrage (120) à un débit d'écoulement déterminé par le premier signal de commande (C1), **caractérisé par** :
la génération du premier signal de commande (C1) en fonction du premier signal indicateur de niveau (s(L)), de telle sorte qu'un niveau de lait (L) indiqué dans le réservoir d'équilibrage (120) au-dessus d'un particulier parmi au moins deux niveaux seuil prédéfinis (Lmin, Lmid, Lmax) amène la pompe à lait (150) à pomper l'écoulement de lait (F) à l'extérieur du réservoir d'équilibrage (120) à un débit (F1, F2, F3) respectif correspondant à chacun des au moins deux niveaux seuil prédéfinis (Lmin, Lmid, Lmax),
la réception d'un paramètre de prédiction (M_{IN}est) indiquant un intrant futur estimé (M_{IN}) de lait provenant du nombre de points de traite (MP1, MP2, MPn), et
la génération du premier signal de commande (C1) en fonction en outre du paramètre de prédiction (M_{IN}est), de telle sorte que le paramètre de prédiction (MINest) prend le pas sur le premier signal indicateur de niveau (s(L)) pour amener la pompe à lait (150) à pomper l'écoulement de lait (F) à l'extérieur du réservoir d'équilibrage (120) à un débit plus faible (F1, F2) que le débit correspondant au particulier des au moins deux niveaux seuil prédéfinis (Lmin, Lmid, Lmax) si le premier signal indicateur de niveau (s(L)) indique que le niveau de lait (L) dans le réservoir d'équilibrage (120) est au-dessus du particulier des au moins deux niveaux seuil prédéfinis (Lmid, Lmax) et
le paramètre de prédiction (MINest) indique que l'intrant futur estimé (MIN) de lait provenant du nombre de points de traite (MP1, MP2, MPn) est en diminution.

10. Procédé selon la revendication 9, dans lequel le paramètre de prédiction (M_{IN}est) est en fonction d'un second signal indicateur de niveau (S(L_{RT})) reflétant un niveau de lait dans un réservoir récepteur (RT) dans lequel le lait provenant d'au moins l'un, et de préférence de plusieurs, du nombre de points de traite (MP1, MP2, MPn) est collecté avant d'être alimenté dans le réservoir d'équilibrage (120).

11. Procédé selon l'une quelconque des revendications 9 ou 10, dans lequel le paramètre de prédiction (M_{IN}est) est en fonction d'au moins l'une parmi :
une ouverture et/ou fermeture d'une porte d'entrée (G1) vers une zone fermée où le nombre de points de traite (MP1, MP2, MPn) sont localisés, et
une ouverture et/ou fermeture d'une porte de sortie (G2) vers l'extérieur de la zone fermée où le nombre de points de traite (MP1, MP2, MPn) sont localisés,
des informations concernant un nombre d'animaux laitiers étant actuellement attachés au nombre de points de traite (MP1, MP2, MPn),
des informations concernant un nombre d'animaux laitiers étant actuellement détachés du nombre de points de traite (MP1, MP2, MPn),
des informations concernant un écoulement de lait ou un rendement de lait provenant des animaux laitiers délivrant actuellement du lait par l'intermédiaire du nombre de points de traite (MP1, MP2, MPn), et
des informations concernant une courbe précédente de rendement de lait ou d'écoulement de lait des animaux laitiers délivrant actuellement du lait par l'intermédiaire du nombre de points de traite (MP1, MP2, MPn).

12. Procédé selon l'une quelconque des revendications 9 à 11, dans lequel le paramètre de prédiction (M_{IN}est) est en fonction d'au moins l'une parmi :
des informations d'identité se rapportant aux animaux laitiers qui sont présents dans la zone fermée où le nombre de points de traite (MP1, MP2, MPn) sont localisés, et
des données temporelles indiquant une sortie d'une période pendant laquelle des animaux laitiers ont été présents dans la zone fermée où le nombre de points de traite (MP1, MP2, MPn) sont localisés.

13. Procédé selon l'une quelconque des revendications 9 à 12, comprenant :
la génération du premier signal de commande (C1) en fonction du paramètre de prédiction (M_{IN}est) de telle sorte que le paramètre de prédiction (M_{IN}est) prend le pas sur le premier signal indicateur de niveau (s(L)) pour amener la pompe à lait (150) à pomper l'écoulement de lait (F) à l'extérieur du réservoir d'équilibrage (120) à un débit plus élevé (F₂, F₃) que le débit correspondant au particulier des au moins deux niveaux seuil prédéfinis (Lₘᵢₙ, L_{mid}, Lₘₐₓ) si
le premier signal indicateur de niveau (s(L)) indique que le niveau de lait (L) dans le réservoir d'équilibrage (120) est inférieur au particulier des au moins deux niveaux seuil prédéfinis (Lₘᵢₙ, L_{mid}) et
le paramètre de prédiction (M_{IN}est) indique que l'intrant futur estimé (M_{IN}) de lait provenant du nombre de points de traite (MP1, MP2, MPn) est en augmentation.

14. Procédé selon l'une quelconque des revendications 9 à 13, comprenant en outre :
la réception d'un signal indicateur de température (T) provenant d'un capteur de température (140) mesurant une température de l'écoulement de lait (F) avant son entrée dans le réservoir de stockage (130) ; et
la génération du premier signal de commande (C1) en fonction en outre du signal indicateur de température (T) de telle sorte qu'une capacité de refroidissement du système de refroidissement (170) est augmentée si le signal indicateur de température (T) reflète une température de lait au-dessus d'une température de consigne.

15. Procédé selon la revendication 14, comprenant :
la génération du premier signal de commande (C1) en fonction du signal indicateur de température (T) de telle sorte que la capacité de refroidissement du système de refroidissement (170) est diminuée si le signal indicateur de température (T) reflète une température du lait en dessous de la température de consigne.

16. Procédé selon l'une quelconque des revendications 9 à 15, dans lequel le système de refroidissement (170) comprend un échangeur de chaleur (160) conçu pour transférer de l'énergie thermique provenant de l'écoulement de lait (F) à un liquide de refroidissement (C) étant mis en circulation dans un refroidisseur (167) au moyen d'une pompe à liquide de refroidissement (165) fonctionnant en réponse à un second signal de commande (C2), et le procédé comprend en outre la génération du second signal de commande (C2) en fonction du premier signal indicateur de niveau (s(L)) de sorte que :
un écoulement du liquide de refroidissement (C) et/ou la capacité de refroidissement du refroidisseur (167) augmentent si le paramètre de prédiction (M_{IN}est) indique que l'intrant futur estimé (M_{IN}) de lait provenant du nombre de points de traite (MP1, MP2, MPn) va augmenter pendant un intervalle futur prédéfini et que l'un quelconque des au moins deux niveaux seuil prédéfinis (Lₘᵢₙ, L_{mid}, Lₘₐₓ) va amener la pompe à lait (150) à pomper l'écoulement de lait (F) à l'extérieur du réservoir d'équilibrage (120) à un débit d'écoulement plus élevé (F₁, F₂, F₃), et
l'écoulement du liquide de refroidissement (C) et/ou la capacité de refroidissement du refroidisseur (167) diminuent si le paramètre de prédiction (M_{IN}est) indique que l'intrant futur estimé (M_{IN}) de lait provenant du nombre de points de traite (MP1, MP2, MPn) va diminuer pendant l'intervalle futur prédéfini et que l'un quelconque des au moins deux niveaux seuil prédéfinis (Lₘᵢₙ, L_{mid}, Lₘₐₓ) va amener la pompe à lait (150) à pomper l'écoulement de lait (F) à l'extérieur du réservoir d'équilibrage (120) à un débit d'écoulement plus faible (F₁, F₂, F₃).
